# EUROPEAN PATENT APPLICATION

(11) **EP 2 549 661 A1**
(43) Date of publication of application: **23.01.2013**
(21) Application number: 12460043.8
(22) Date of filing: 20.07.2012
(51) Int. Cl.: H04B 1/38

(54) **A system for continuous monitoring of electromagnetic radiation energy emitted by mobile telephone with automatic notification of any hazard arising for the health of its user**

(30) Priority: 20.07.2011 PL 39572011
(71) Applicant: Telekomunikacja Polska S.A., 00-105 Warszawa (PL)
(72) Inventor: Grabowski, Wlodzimierz, 91-842 Lodz (PL)
(74) Representative: Piotrowicz, Alicja

(57) **Abstract**

In the autonomous module with an internal antenna WA, located inside the mobile telephone enclosure, a measuring instrument of electromagnetic radiation energy level MPE, through a serially connected system of indexing electromagnetic radiation energy measurement results with a clock signal UIS and the system determining the actual minimum value and actual maximum value of electromagnetic radiation energy WCMM, is connected with the system of analysis of electromagnetic radiation energy measurement results UAW, to which the device for setting permissible electromagnetic radiation energy levels ZPE is connected. The outputs of the control system for electromagnetic radiation energy measurement results USW are connected through the generator of sound signals GSF, the generator of video signals GSW and the generator of warning texts GTO to adequate inputs of the output system UW.

## Description

The subject of the invention is a system for continuous monitoring of electromagnetic radiation energy emitted by a mobile telephone with automatic notification of any hazard arising for the health of its user, as well as the automatic switching off the transmitter in situations when the user of a mobile telephone continues to talk following receipt of a warning about exceeding the permissible electromagnetic radiation energy dose emitted in the direction of his/her head.

Polish patent description PL 198300 B1 discloses a mobile telephone which comprises a thermo vision camera, a digital system of frequency spectrum analysis and an analogue - digital converter of a patient's biomedical ECG signals.

The subject of American patent application US 2007/0015546 A1 is receiver of radio waves, in which the intensity level of the received electrical field is expressed on the display by the height of vertical bar.

A mobile phone with a breathalyser, known from the documentation of Polish invention application PL 382952 A1, comprises in its enclosure a sensor/transducer of alcohol concentration, and the measurement results obtained in it are presented on the mobile telephone display and transferred to a central unit.

Technical solutions of mobile telephones available within the territory of the Republic of Poland meet technical requirements in the scope of permissible levels of electromagnetic radiation radio frequency energy emitted by the phones, which is specified in Polish Standard PN-EN 50360:2004/AC:2006, entitled: Determination of a mobile telephone's compatibility with the basic limitations of exposure of humans to an electromagnetic field (300 MHz - 3 GHz) - product standard, which is harmonised with European Council Directive 1999/5/EC of July 12th, 1999 on personal exposure to radiation of electromagnetic fields (0 Hz up to 300 GHz). The energy of radio frequency electromagnetic radiation penetrates the skin and increases the temperature of human body cells.

According to the invention, the essence of a continuous monitoring system of electromagnetic energy radiation emitted by a mobile telephone with automatic notification of any hazard arising for the health of its user consists in that the preamplifier output is connected through an electromagnetic radiation energy level measuring instrument to a system indexing the results of electromagnetic radiation energy measurements with a clock signal, together with a clock connected to it. The output of the circuit, indexing the results of electromagnetic radiation energy measurements with the clock signal, is connected through a system determining the actual minimum value and actual maximum value of electromagnetic energy radiation to the input of a system for analysis of the results of electromagnetic radiation energy measurement, to which a device for setting permissible electromagnetic radiation energy levels is connected. The output of the system analysing the results of electromagnetic radiation energy is connected through the operating memory to a selector of electromagnetic radiation energy measurement results. The outputs of the selector of electromagnetic radiation energy measurement results are connected through a system averaging the electromagnetic radiation energy measurement results from the current call, a system averaging the electromagnetic radiation energy measurement results from most recent hour and a system averaging the electromagnetic radiation energy measurement results from the whole day to individual inputs of a control system for the electromagnetic radiation energy measurement results. An electromagnetic radiation emission duration time counter is connected to the system averaging the electromagnetic radiation energy measurement results from the current call, a system averaging the electromagnetic radiation energy measurement results from most recent hour and a system averaging the electromagnetic radiation energy measurement results from the whole day and to an electromagnetic radiation energy measurement results control system. The output that controls the power supply of the electromagnetic radiation energy measurement results control system transmitter is connected through the control system of a mobile telephone transmitter power supply system to the on switch of the mobile telephone transmitter power supply and to the on/off switch of the mobile telephone transmitter power supply. The remaining outputs of the electromagnetic radiation energy measurement results control system are adequately connected through a generator of sound signals, a generator of video signals and a generator of warning texts to the inputs of the output system. The output system includes the output terminal of the sound signal, the output terminal of the video signal and the input terminal for connection with a keyboard.

Preferably, an auxiliary clock connected with the clock is attached to the system determining the actual minimum value and actual maximum value of electromagnetic radiation energy.

The essential advantageous effects of a system for continuous monitoring of electromagnetic radiation energy emitted by a mobile telephone with automatic notification of any hazard arising for the health of its user, according to the invention, with respect to the prior art, consist in that the mobile telephone, in its active mode, can inform its user on constant basis about exceeding the permissible dose of electromagnetic radiation energy emitted by a mobile telephone antenna in the direction of his/her head, within time sequences determined by the user of the mobile telephone. It enables elimination of the risk connected with a mobile telephone user's body adsorption of electromagnetic radiation energy within a radio frequency band from 300 kHz up to 100 GHz. Furthermore, it enables the indication of such a location in an area in which the level of electromagnetic radiation energy emitted by a mobile telephone would possibly be the lowest. Part of the system for continuous monitoring of electromagnetic radiation energy emitted by a mobile telephone with automatic notification of any hazard arising for the health of its user, according to the invention, is implemented by means of functional structure fragments and fragments of mobile telephone software.

A system for continuous monitoring of electromagnetic radiation energy emitted by a mobile telephone with automatic notification of any hazard arising for the health of its user, according to the invention, constitutes an autonomous module of a mobile telephone.

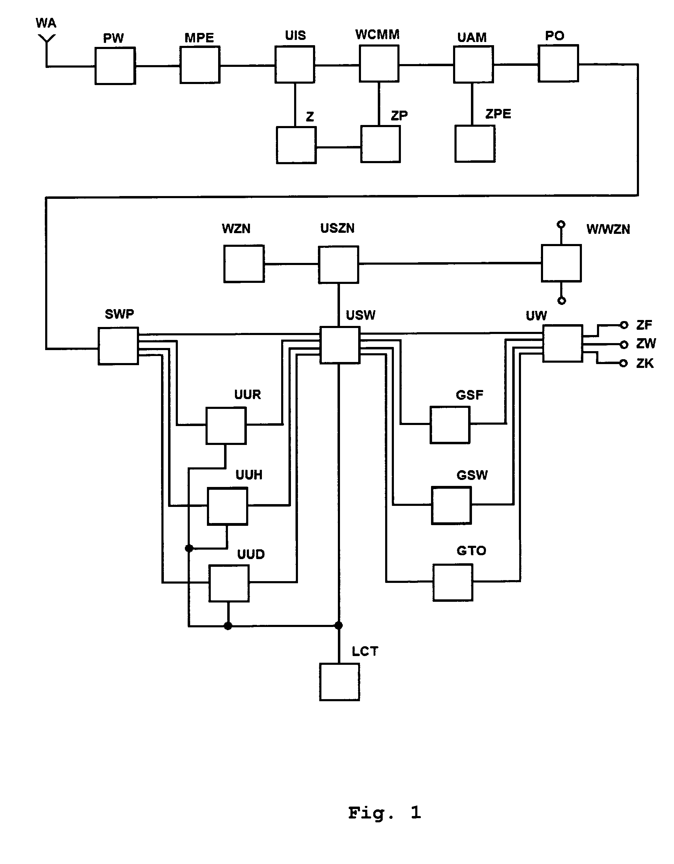

An embodiment of a system for continuous monitoring of electromagnetic radiation energy emitted by a mobile telephone with automatic notification of any hazard arising for the health of its user, according to the invention, is reproduced in the figure in the form of a block diagram.

In an embodiment of a system for continuous monitoring of electromagnetic radiation energy emitted by a mobile telephone with automatic notification of any hazard arising for the health of its user, according to the invention, there is a miniature internal antenna WA inside its enclosure, having a spatial arrangement enabling continuous monitoring of electromagnetic radiation energy emitted in the direction of the head of a mobile telephone user. The internal antenna WA, constituting an integral part of a continuous monitoring system of electromagnetic radiation energy emitted by a mobile phone, is connected to a preamplifier PW, whose output is connected to a measuring instrument of electromagnetic radiation energy MPE.

The actual measurement results of the electromagnetic radiation energy level, together with its date and time, are indicated on the display of the mobile telephone. The user of the mobile telephone performs a self-setting of the numerical value of the permissible level electromagnetic radiation energy, as well as the form and mode of warning functions implementation.

Output of the measuring instrument of electromagnetic radiation energy level MPE is connected with the system of indexing of electromagnetic radiation energy measurement results with a clock signal UIS, to which the clock Z is connected. The output of the system of indexing of electromagnetic radiation energy measurement results with a clock signal UIS is connected with the system determining the actual minimum value and actual maximum value of electromagnetic radiation energy WCMM. Connected to the system determining the actual minimum value and actual maximum value of electromagnetic radiation energy WCMM is the auxiliary clock ZP, subsequently connected to the clock Z. Elapsed time indications of the auxiliary clock ZP are synchronised with the elapsed time indications of the clock Z.

The output of the system determining the actual minimum value and actual maximum value of electromagnetic radiation energy WCMM is connected with the input of the system of analysis of electromagnetic radiation energy measurement results UAW, to which electromagnetic radiation energy allowable level setting device ZPE is connected. The system of electromagnetic radiation energy measurement results analysis UAW is connected, through operating memory PO, with the selector of electromagnetic radiation energy measurement results SWP, whose outputs, through the system averaging the measurement results of electromagnetic radiation energy from the current call UUR, the system averaging the measurement results of electromagnetic radiation energy from the last hour UUH and the system averaging the measurement results of electromagnetic radiation energy from the previous day UUD, are connected to individual inputs of the control system of electromagnetic radiation energy measurement results USW.

The counter of electromagnetic radiation emission duration time LCT is connected to the system averaging the electromagnetic radiation energy measurement results from the current call UUR, to the system averaging the electromagnetic radiation energy measurement results from the last hour, to the system averaging the electromagnetic radiation energy measurement results from the previous day UUD and to the control system of electromagnetic radiation energy measurement results USW.

The output, controlling the power supply of the control system of electromagnetic radiation energy measurement results USW, through the control system of mobile telephone transmitter power supply USZN, is connected with the on-switch of mobile telephone transmitter power supply WZN and with the on/off switch of mobile telephone transmitter power supply W/WZN.

In a situation when the mobile telephone user is still talking by telephone despite received warning about exceeding the permissible dose of electromagnetic radiation energy emitted by the mobile telephone antenna in the direction of his/her head, the system for continuous monitoring of electromagnetic radiation energy emitted by a mobile telephone with automatic notification of any hazard arising for the health of its user, according to the invention, automatically switches the mobile telephone transmitter off. However, the mobile telephone user may, upon his/her own responsibility, switch the power supply of the mobile telephone transmitter on by pressing of the appropriate key in order to continue the call with the arbitrary subscriber.

The remaining outputs of control system of electromagnetic radiation energy measurement results USW, through the generator of audio signals GSF, the generator of video signals GSW and the generator of warning texts GTO, are appropriately connected with the inputs of the output system UW, which contains the output terminal of the audio signal ZF, output terminal of the video signal ZW and the input terminal for connection to a keyboard ZK.

A system for continuous monitoring of electromagnetic radiation energy emitted by a mobile telephone with automatic notification of any hazard arising for the health of its user, according to the invention, after measurements of the electromagnetic radiation energy level emitted in the direction of the head of a mobile telephone user have been done, generates acoustic and alphanumeric warning signals, which provide notice about the arising hazard connected with absorption of inadmissible doses of electromagnetic radiation energy by the body of the mobile telephone user; moreover they encourage one to avoid holding the mobile telephone to the head while connecting to an arbitrary subscriber and to placing a call with the use of a headset or hands-free kit. It prevents the disadvantageous biological effects for human body tissues resulting from irradiating with an electromagnetic radio-frequency field in the 300 kHz up to 100 GHz range.

Although the system for continuous monitoring of electromagnetic radiation energy emitted by a mobile telephone with automatic notification of any hazard arising for the health of its user, according to the invention, has been determined by means of a single claim, presented in the form of a specific embodiment in the description of the invention and reproduced in the figure, those skilled in the art of systems for continuous monitoring of electromagnetic radiation energy emitted by a mobile telephone with automatic notification of any hazard arising for the health of its user shall readily recognise that the data contained in them, concerning a system for continuous monitoring of electromagnetic radiation energy emitted by a mobile telephone with automatic notification of any hazard arising for the health of its user, can not be interpreted as limiting the idea of this invention only to the data.

### List of reference designations

WA - internal antenna,
PW - preamplifier,
MPE - measuring instrument of electromagnetic radiation energy,
UIS - system of indexing electromagnetic radiation energy measurement results with a clock signal,
Z - clock,
WCMM - system determining the actual minimum value and actual maximum value of electromagnetic radiation energy,
ZP - auxiliary clock,
UAW - system of analysis of electromagnetic radiation energy measurement results,
ZPE - device for setting permissible electromagnetic radiation energy levels,
PO - operating memory,
SWP - selector of electromagnetic radiation energy measurement results,
UUR - system averaging the measurement results of electromagnetic radiation energy from the current call,
UUH - system averaging the measurement results of electromagnetic radiation energy from the last hour,
UUD - system averaging the measurement results of electromagnetic radiation energy from the previous day,
WZN - on-switch of mobile telephone transmitter power supply,
USZN - control system of mobile telephone transmitter power supply on/off switch,
W/WZN - on/off switch of mobile telephone transmitter power supply,
USW - control system of electromagnetic radiation energy measurement results,
LCT - counter of electromagnetic radiation emission duration time,
GSF - generator of sound signals (audio),
GSW - generator of video signals (flashing icon),
GTO - generator of warning texts,
UW - output system,
ZF - output terminal of the sound (audio) signal for connection with a sound reproduction device,
ZW - output terminal of the video signal (picture) for connection to a display,
ZK - input terminal for connection to a keyboard.

## Claims

1. A system for continuous monitoring of electromagnetic radiation energy emitted by a mobile telephone with automatic notification of any hazard arising for the health of its user, comprising an internal antenna, preamplifier, measuring instrument of electromagnetic radiation energy levels and operating memory, **characterized in that** the output of the preamplifier (PW) is connected, through a measuring instrument of electromagnetic radiation energy level (MPE), with the system of indexing electromagnetic radiation energy measurement results with a clock signal (UIS) with a clock (Z) connected to it, while the output of the system of indexing electromagnetic radiation energy measurement results with a clock signal (UIS), through the system determining the actual minimum value and actual maximum value of electromagnetic radiation energy (WCMM), is connected with the input of a system of analysis of electromagnetic radiation energy measurement results (UAW), to which the device for setting permissible electromagnetic radiation energy levels (ZPE) is connected, while the output of the system of analysis of electromagnetic radiation energy measurement results (UAW) is connected, through the operating memory (PO), with a selector of electromagnetic radiation energy measurement results (SWP), whose outputs are connected, through the system averaging the measurement results of electromagnetic radiation energy from the current call (UUR), the system averaging the measurement results of electromagnetic radiation energy from the last hour (UUH), and the system averaging measurement results of electromagnetic radiation energy from the previous day (UUD), with the individual inputs of the control system of electromagnetic radiation energy measurement results (USW), while the counter of electromagnetic radiation emission duration time (LCT) is connected to the system averaging the measurement results of electromagnetic radiation energy from the current call (UUR) to the system averaging the measurement results of electromagnetic radiation energy from the last hour (UUH) and to the system averaging the measurement results of electromagnetic radiation energy from the previous day (UUD), while the output controlling power supply of electromagnetic radiation energy measurement results control system transmitter (USW) through the control system of mobile telephone transmitter power supply (USZN) is connected with the on-switch of the mobile telephone transmitter power supply (WZN) and with the on/off switch of mobile telephone transmitter power supply (W/WZN), while the remaining outputs of the control system of electromagnetic radiation energy measurement results (USW), through the generator of sound signals (GSF), the generator of video signals (GSW) and the generator of warning texts (GTO), are appropriately connected with the inputs of the output system (UW), which comprises the output terminal of the sound signal (ZF), output terminal of the video signal (ZW) and the input terminal for connection to a keyboard (ZK).

2. A system, according to claim 1, **characterized in that** the auxiliary clock (ZP), which is connected with the clock (Z), is connected to the system determining the actual minimum value and actual maximum value of electromagnetic radiation energy (WCMM).
